# EUROPÄISCHE PATENTSCHRIFT

(11) **EP 3 220 194 B1**
(45) Veröffentlichungstag und Bekanntmachung des Hinweises auf die Patenterteilung: **17.07.2019**
(21) Anmeldenummer: 16001610.1
(22) Anmeldetag: 22.07.2016
(51) Int. Cl.: G03B 15/06

(54) **VORRICHTUNG ZUR BEEINFLUSSUNG DES LICHTS BEI FOTOAUFNAHMEN**
DEVICE FOR MANIPULATING LIGHT WHEN TAKING PHOTOGRAPHS
DISPOSITIF DE MANIPULATION DE LUMIÈRE POUR PRENDRE DES PHOTOS

(30) Priorität: 16.03.2016 DE 202016101460 U
(43) Veröffentlichungstag der Anmeldung: 20.09.2017
(73) Patentinhaber: Carbon System Verwaltungs GmbH, 97828 Marktheidenfeld (DE)
(72) Erfinder: Schwab, Christian Bernhard, 97828 Marktheidenfeld (DE); Kreuzer, Markus, 97828 Marktheidenfeld (DE)
(74) Vertreter: Gleim, Christian Ragnar

(56) Entgegenhaltungen:
- CN-U- 201 765 419
- US-A- 3 939 340
- US-A1- 2001 009 513
- US-A1- 2012 170 278
- US-A1- 2013 272 687

## Beschreibung

Die Erfindung betrifft eine Vorrichtung zur Beeinflussung des Lichts bei Fotoaufnahmen gemäß dem unabhängigen Anspruch.

Bei Fotoaufnahmen ist das zur Verfügung stehende Licht zur Beleuchtung des zu fotografierenden Objekts bzw. einer Person wichtig. Gleiches gilt natürlich auch für Filmaufnahmen. Gut ausgeleuchtete Gegenstände werden auf dem Bild detailreicher abgebildet. Insbesondere bei Fotoaufnahmen im Freien ergibt sich das Problem, dass das zur Verfügung stehende Licht ungleichmäßig verteilt ist. So können Wolken die Sonne verdecken und natürliche Hindernisse (z.B. Bäume oder Hügel) das Licht ungünstig beeinflussen.

Es ist bekannt zur Ausleuchtung bei Fotoshootings das natürliche oder künstliche Licht mittels Reflektoren auf die fotografierte Person zu leiten, mittels Diffusoren zu zerstreuen oder mittels Filter hinsichtlich seiner spektralen Anteile zu optimieren.

Dazu wird eine flächige Bespannung an einem Tragrahmen angeordnet. Das Material der Bespannung kann entsprechend der Funktion (reflektierend, lichtdurchlässig oder lichtfilternd) gewählt werden. Bekannte Bespannungen sind aus einem flexiblen Material und am Rand mit einer umlaufend vernähten Schlaufe ausgebildet. In der umlaufenden Schlaufe wird ein Teil des Tragrahmens so angeordnet, dass er die Bespannung flächig auseinanderhält. Bekannte Tragrahmen sind aus Aluminiumrohren hergestellt. Die umlaufenden Aluminiumrohre sind ineinandergesteckt und können zur Erhöhung der Formstabilität mit einem oder mehreren Querrohren verbunden sein. Die Querrohre haben denselben Umfang wie die umlaufenden Rohre und werden über Verbindungselemente mittels T-förmigen Klammern mit den umlaufenden Rohren verbunden, wobei die T-förmigen Klammern miteinander verschraubt werden.

US 2012/0170278 A1 beschreibt einen Reflektor welcher auf zwei Stäben aufgespannt ist welche mittels drei Querstreben verbunden sind. Diese Querstreben sind mit Splinten und schellen mit den Spannstäben verbunden. CN 2017 65 419 U zeigt eine ähnliche Vorrichtung bei welcher die Spannstäbe durch eine Öffnung gesteckt werden müssen. Die US 2001/0009513 A1 zeigt einen Reflektor bei dem die Spannstäbe mittels eines einzigen Querstabes verbunden sind. US 2013/0272687 A1 zeigt einen Reflektor der auf einen Rahmen aufgespannt ist und ein Querstab welcher mit Schellen an dem Rahmen befestigt ist dient dabei als Haltegriff.

Dabei ergibt sich das Problem, dass bei Fotoshootings zum Beispiel im Freien der zerlegte Rahmen zum jeweiligen Ort transportiert und dort erst aufgebaut werden muss. Das Aufbauen ist schon aufgrund der Art der Befestigung der Querrohre an den umlaufenden Rohren aufwendig. Insbesondere müssen dabei separate Befestigungselemente wie Schrauben verwendet werden, die üblicherweise an mehreren Stellen nacheinander verschraubt werden.

Es ist die Aufgabe der Erfindung, eine Vorrichtung zur Beeinflussung des Lichts bei Fotoaufnahmen bereitzustellen, mit der die Nachteile im Stand der Technik überwunden werden und die sich insbesondere schnell aufbauen und leicht handhaben lässt.

Die Erfindung betrifft eine Vorrichtung zur Beeinflussung des Lichts bei Fotoaufnahmen (z.B. Bildaufnahmen oder Filmaufnahmen) mit einem Tragerahmen und mit einer flächigen Bespannung. Der Tragerahmen umfasst einen ersten Spannstab, der an einem ersten Endabschnitt der Bespannung befestigt ist, und einen zweiten Spannstab, der an einem zweiten, dem ersten gegenüberliegenden, Endabschnitt der Bespannung befestigt ist. Der Tragerahmen umfasst ferner mindestens einen Spreizstab mit endseitigen Aufnahmestücken mit jeweils konkaven Aufnahmeflächen zur Aufnahmen der Außenfläche jeweils eines Spannstabs, und wobei der mindestens eine Spreizstab mit seiner Länge derart ausgebildet ist, um im aufgespannten Zustand den ersten Spannstab und den zweiten Spannstab gegen die aufgespannte Bespannung zu halten.

Der Spreizstab ist mit seinen Aufnahmestücken derart ausgebildet, um die seitliche Außenfläche des ersten und zweiten Spannstabs im gespannten Zustand der Bespannung aufzunehmen. Bei runden (rohrförmigen) Spannstäben sind die konkaven Aufnahmeflächen an dem Aufnahmestücken vorteilhafterweise halbrund ausgeformt (und zur Mitte des Spreizstabs hin gewölbt). So kann die Vorrichtung bei Fotoshootings im Freien einfach zerlegt, transportiert und vor Ort schnell aufgebaut werden. Die Konstruktion macht die Verwendung von zusätzlichen Befestigungselementen, wie Schrauben, überflüssig. Dazu wird die Bespannung ausgebreitet und zwischen den ersten Spannstab und den zweiten Spannstab der Spreizstab eingelegt (bzw. eingespannt gegen die Elastizität des Spreizstabs selbst oder gegen die Elastizität der Bespannung). Eine Breite B-B der Bespannung (von Innenkante Spannstab zu Innenkante des anderen Spannstabs) entspricht dabei höchstens dem Abstand zwischen den Aufnahmeflächen des mindestens einen Spreizstabs. Vorteilhafterweise kann die Breite entsprechend diesem Abstand gewählt werden, um die Bespannung gegen die Elastizität des Spreizstabs zu spannen.

Gemäß einem bevorzugten Aspekt ist die Bespannung in einer Breite B-B zwischen dem ersten Spannstab und dem zweiten Spannstab zumindest abschnittsweise elastisch ausgebildet. Bevorzugt ist die Breite B-B der Bespannung im ungespannten Zustand der Bespannung kürzer, als der Abstand zwischen den Aufnahmeflächen des mindestens einen Spreizstabs. Auf diese Weise kann die Bespannung gegen die Elastizität der Bespannung selbst auf den Spreizstab gespannt werden.

Vorteilhafterweise umfasst die Bespannung in der Breite B-B zwischen dem ersten Spannstab und dem zweiten Spannstab einen ersten elastischen Außenabschnitt, daran anschließend einen Mittelabschnitt und daran anschließend einen zweiten elastischen Außenabschnitt. Die elastischen Außenabschnitte lassen es offen für den Mittelabschnitt ein Material zu verwenden, das elastisch ist oder nicht. Bevorzugt sind die Außenabschnitte ca. 10 cm breit und aus einem elastischen Textil gebildet. Die Außenabschnitte umfassen die Endabschnitte mit denen die Bespannung am jeweiligen Spannstab befestigt ist.

Gemäß einem vorteilhaften Aspekt umfasst der Mittelabschnitt eine Ausnehmung. Die Ausnehmung weist eine entsprechende Position und Größe (5x10 cm) auf, dass eine Person, die die Vorrichtung in der Hand hält, durchschauen kann.

Besonders bevorzugt umfasst die Bespannung einen lösbaren Verschluss jeweils zwischen dem ersten elastischen Außenabschnitt und dem Mittelabschnitt sowie zwischen dem zweiten elastischen Außenabschnitt und dem Mittelabschnitt. Dazu kann ein Reisverschluss zum Trennen von Außenabschnitt und Mittelabschnitt vorgesehen sein, der entlang der gesamten Länge A-A der Bespannung verläuft. So kann der Mittelabschnitt entsprechend seiner gewünschten Funktion bzw. des entsprechenden Materials einfach ausgetauscht werden.

Ferner bevorzugt umfasst der Mittelabschnitt mindestens ein formsteifes Element. Vorteilhafterweise ist jedes formsteife Element eine Kunststofflatte, die sich entlang der gesamten Länge A-A des Mittelabschnitts erstreckt. Die erste Latte ist im Mittelabschnitt benachbart zum lösbaren Verschluss zwischen dem ersten elastischen Außenabschnitt und dem Mittelabschnitt angeordnet. Die zweite Latte ist im Mittelabschnitt benachbart zum lösbaren Verschluss zwischen dem zweiten elastischen Außenabschnitt und dem Mittelabschnitt angeordnet. Das formsteife Element erlaubt ein einfaches Verbinden mittels Reisverschluss, da der Mittelabschnitt so gut positionierbar ist.

Weiterhin bevorzugt umfasst der mindestens eine Spreizstab ein Rohr aus einem Kohlefasermaterial. Das ist vorteilhafterweise ein Rohr mit einem Durchmesser von 2 cm bis 10 cm, insbesondere 4 cm bis 8 cm, mit einem hohlem Querschnitt.

Ein bevorzugter Aspekt sieht vor, dass das Rohr aus Kohlefasermaterial aus einem ersten Rohrteil und einem zweiten Rohrteil gebildet ist. Der erste Rohrteil umfasst ein (fest damit verbundenes und aus diesem herausstehendes) Innenrohr, dessen Umfang derart gewählt ist, dass das zweite Rohrteil auf das Innenrohr (formschlüssig) aufsteckbar ist, um das erste Rohrteil mit dem zweiten Rohrteil miteinander zu verbinden. So lässt sich der Spreizstab zum Transport zerlegen. Die Rohrteile können schräg abgeschnittene Anlageflächen haben, um zu vermeiden, dass diese sich im zusammengebauten Zustand verdrehen.

Besonders bevorzugt umfasst der Tragrahmen einen ersten Spreizstab und einen zweiten Spreizstab. So kann der Tragrahmen auch bei größeren Rahmenbreiten stabil ausgeführt werden. Außerdem erlauben zwei Spreizstäbe ein leichtes Tragen mit zwei Händen.

Im Folgenden wird die Erfindung anhand der in den beigefügten Zeichnungen dargestellten Beispiele näher erläutert.

Es zeigen:
- Fig. 1: eine Vorderansicht eines Ausführungsbeispiels einer erfindungsgemäßen Vorrichtung;
- Fig. 2: eine Rückansicht der Vorrichtung aus Fig. 1; und
- Fig. 3: eine Schnittansicht der Vorrichtung aus Fig. 1 und 2.

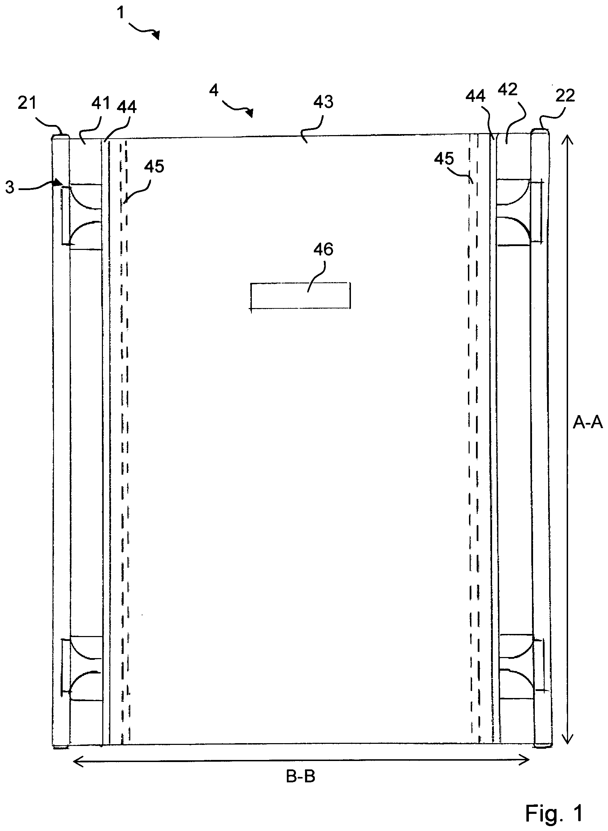

**Fig. 1** zeigt eine Vorrichtung 1 zur Beeinflussung des Lichts bei Fotoaufnahmen mit einem Tragerahmen und mit einer flächigen Bespannung 4. Der Tragerahmen umfasst einen ersten Spannstab 21, der an einem ersten Endabschnitt der Bespannung 4 befestigt ist, und einen zweiten Spannstab 22, der an einem zweiten, dem ersten gegenüberliegenden, Endabschnitt der Bespannung 4 befestigt ist.

Die Bespannung 4 ist in der Breite B-B zwischen dem ersten Spannstab 21 und dem zweiten Spannstab 22 (jeweils Innenkante) abschnittsweise elastisch ausgebildet, indem an einem ersten elastischen Außenabschnitt 41 sich ein unelastischer Mittelabschnitt 43 und daran anschließend ein zweiter elastischer Außenabschnitt 42 angeordnet ist. Der Außenabschnitt 41, 42 ist im vorliegenden Beispiel ca. 10 cm breit und von dem Endabschnitt, der durch eine Randwulst der Bespannung gebildet wird, zu unterschieden. Zwischen dem ersten elastischen Außenabschnitt 41 und dem Mittelabschnitt 43 sowie zwischen dem zweiten elastischen Außenabschnitt 42 und dem Mittelabschnitt 43 ist ein Reisverschluss 44 entlang der Länge A-A angeordnet. So kann der Mittelabschnitt 43 entsprechend seiner Funktion als Reflektor, Diffusor oder Lichtfilter ausgetauscht werden, um die Vorrichtung variabel einzusetzen.

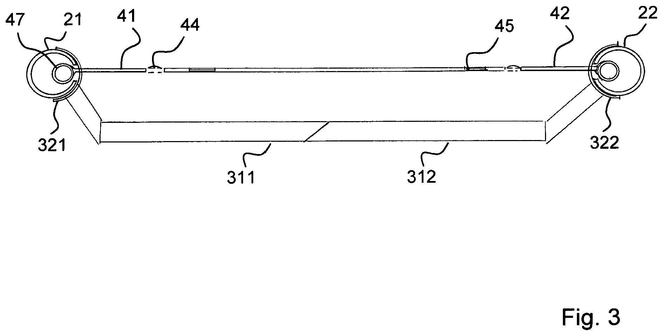

Die Vorrichtung 1 weist einen ersten und einen zweiten Spreizstab 3 auf, die an beiden Enden jeweils ein Aufnahmestück mit einer halbrunden Aufnahmefläche haben (siehe Fig. 3), welche derart ausgebildet sind, um die Außenfläche des ersten und zweiten Spannstabs 21, 22 im gespannten Zustand der Bespannung 4 aufzunehmen. So kann die Vorrichtung 1 bei Fotoshootings im Freien zerlegt, transportiert und vor Ort schnell aufgebaut werden. Dazu wird die Bespannung ausgebreitet und zwischen dem ersten Spannstab 21 und dem zweiten Spannstab 22 die beiden Spreizstäbe 3 nacheinander eingeklemmt. Indem die Bespannung 4 in einer Breite B-B zwischen dem ersten Spannstab 21 und dem zweiten Spannstab 22 elastisch ausgebildet ist, können die Spreizstäbe 3 gegen die Elastizität der Bespannung 4 eingespannt werden.

Jeweils benachbart zum Reisverschluss 44 sind formsteife Kunststofflatten 45 im Mittelabschnitt 43 eingearbeitet, die sich entlang der gesamten Länge A-A erstrecken. Außerdem ist in der Mitte der Bespannung 4 eine Ausnehmung 46 zum Durchschauen angeordnet.

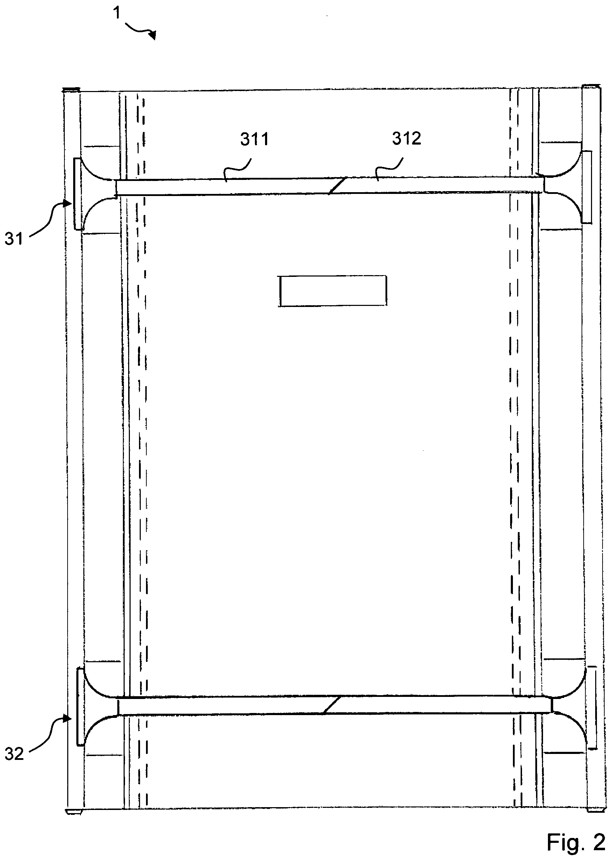

In **Fig. 2** ist die Rückseite der Vorrichtung aus Fig. 1 zu sehen. Die Vorrichtung 1 umfasst einen ersten Spreizstab 31 und einen zweiten Spreizstab 32 mit einem Rohr(-mittelteil) aus Kohlefasermaterial. Das Rohr besteht aus einem ersten Rohrteil 311 und einem zweiten Rohrteil 312. Der erste Rohrteil 312 umfasst ein Innenrohr (nicht gezeigt), dessen Umfang derart gewählt ist, dass das zweite (hohle) Rohrteile 312 auf das Innenrohr aufsteckbar sind. So kann das erste Rohrteil 311 mit dem zweiten Rohrteil 312 verbunden werden bzw. zerlegt und transportiert werden. Das ist insbesondere bei größeren Abmessungen für die Vorrichtung 1 von Vorteil. Die aneinanderliegenden Enden des ersten Rohrteils 311 und einem zweiten Rohrteils 312 sind schräg abgeschnitten. So kann ein Verdrehen in der verbundenen Position der beiden Teile 311 und 312 vermieden werden.

Die Schnittansicht gemäß Fig. 3 zeigt, wie im Folgenden diskutiert, die Ausbildung der Aufnahmeflächen gut. Zu sehen sind die endseitigen Aufnahmestücke jeweils mit halbrunden Aufnahmeflächen 321, 322, deren Form der Außenkontur der runden Spannstäbe 21, 22 entspricht. Im aufgebauten Zustand der Vorrichtung liegen die Spannstäbe 21, 22 jeweils in den Aufnahmeflächen 321, 322 bzw. sind gegen diese gespannt. Die Spannstäbe sind mit einer Endwulst 47 der Bespannung verbunden.

Die Bespannung 4 zeigt einen ersten elastischen Außenabschnitt 41, einen unelastischen Mittelabschnitt 43 und daran anschließend einen zweiten elastischen Außenabschnitt 42. Der Mittelabschnitt 43 ist mittels Reisverschlüssen austauschbar. So kann der Mittelabschnitt 43 entsprechend seiner Funktion als Reflektor, Diffusor oder Lichtfilter ausgetauscht werden, um die Vorrichtung variabel einzusetzen.

Im vorliegenden Fall sind die Außenabschnitte 41, 42 elastisch ausgeführt, so dass die Breite der Bespannung leicht kürzer als der Abstand zwischen den Aufnahmeflächen 321, 322 ist. So kann der Spreizstab 3 gegen die Elastizität der Bespannung 4 eingespannt werden, um die Vorrichtung vor Ort mit wenigen Handgriffen aufzubauen.

## Patentansprüche

1. Vorrichtung zur Beeinflussung des Lichts bei Fotoaufnahmen mit einem Tragerahmen und mit einer flächigen Bespannung (4), welcher Tragerahmen einen ersten Spannstab (21), der an einem ersten Endabschnitt der Bespannung (4) befestigt ist, und einen zweiten Spannstab (22), der an einem zweiten, dem ersten gegenüberliegenden, Endabschnitt der Bespannung (4) befestigt ist, umfasst, und wobei der Tragerahmen ferner mindestens einen Spreizstab (3) mit endseitigen Aufnahmestücken (31, 32) mit jeweils konkaven Aufnahmeflächen (322, 321) zur Aufnahmen der Außenfläche jeweils eines Spannstabs (21, 22) umfasst, und wobei der mindestens eine Spreizstab (3) mit seiner Länge derart ausgebildet ist, um im aufgespannten Zustand den ersten Spannstab (21) und den zweiten Spannstab (22) gegen die aufgespannte Bespannung (4) zu halten, **dadurch gekennzeichnet, dass** die konkaven Aufnahmeflächen (321, 322) halbrund und zur Mitte des Spreizstabes hin gewölbt ausgebildet sind.

2. Vorrichtung nach Anspruch 1, wobei die Bespannung (4) in einer Breite (B-B) zwischen dem ersten Spannstab (21) und dem zweiten Spannstab (22) zumindest abschnittsweise elastisch ausgebildet ist, und wobei die Breite (B-B) der Bespannung (4) im ungespannten Zustand der Bespannung (4) kürzer ist, als der Abstand zwischen den Aufnahmeflächen (321, 322) des mindestens einen Spreizstabs (3).

3. Vorrichtung nach Anspruch 1 oder 2, wobei die Bespannung (4) in der Breite (B-B) zwischen dem ersten Spannstab (21) und dem zweiten Spannstab (22) einen ersten elastischen Außenabschnitt (41), daran anschließend einen Mittelabschnitt (43) und daran anschließend einen zweiten elastischen Außenabschnitt (42) umfasst.

4. Vorrichtung nach Anspruch 3, wobei die Bespannung (4) einen lösbaren Verschluss (44) jeweils zwischen dem ersten elastischen Außenabschnitt (41) und dem Mittelabschnitt (43) sowie zwischen dem zweiten elastischen Außenabschnitt (42) und dem Mittelabschnitt (43) umfasst.

5. Vorrichtung nach einem der vorangehenden Ansprüche, wobei der Mittelabschnitt (43) eine Ausnehmung (46) umfasst.

6. Vorrichtung nach einem der vorangehenden Ansprüche, wobei der Mittelabschnitt (43) mindestens ein formsteifes Element (45) umfasst.

7. Vorrichtung nach Anspruch 6, wobei jedes formsteife Element (45) eine Kunststofflatte ist, und wobei zwei Kunststofflatten entlang der Länge (A-A) in einem Randbereich des Mittelabschnitts (43) angeordnet sind.

8. Vorrichtung nach einem der vorangehenden Ansprüche, wobei der mindestens eine Spreizstab (3) ein Rohr aus einem Kohlefasermaterial umfasst.

9. Vorrichtung nach Anspruch 8, wobei das Rohr einen ersten Rohrteil (311) und einen zweiten Rohrteil (312) umfasst, und wobei der erste Rohrteil (312) ein Innenrohr umfasst, dessen Umfang derart gewählt ist, dass das zweite Rohrteil (312) auf das Innenrohr aufsteckbar ist, um das erste Rohrteil (311) mit dem zweiten Rohrteil (312) miteinander zu verbinden.

10. Vorrichtung nach einem der vorangehenden Ansprüche, wobei der Tragrahmen einen ersten Spreizstab (31) und einen zweiten Spreizstab (32) umfasst.

## Claims

1. Device for influencing light during the taking of photographs with a support frame and an extensive covering (4), wherein said support frame comprises a first stretcher rod (21), which is attached to a first end portion of the covering (4), and a second stretcher rod (22), which is attached to a second end portion of the covering (4) which faces the first end portion, and wherein said support frame further comprises at least one spreader rod (3) with end-side receiving means (31, 32) each having concave receiving surfaces (322, 321) for receiving the outer surface of respectively one stretcher rod (21, 22), and wherein the at least one spreader rod (3) with the length thereof is designed so as to retain, in the expanded state, the first stretcher rod (21) and the second stretcher rod (22) against the stretched covering (4), **characterized in that** the concave receiving surfaces (321, 322) are semicircular and bulged towards the middle of the spreader rod.

2. Device according to claim 1, wherein, the covering (4) is elastically designed at least in portions in a width (B-B) between the first stretcher rod (21) and the second stretcher rod (22), and wherein in the unstretched state of the covering (4), the width (B-B) of the covering (4) is shorter than the distance between the receiving surfaces (321, 322) of the at least one spreader rod (3).

3. Device according to claim 1 or 2, wherein, the covering (4) in the width (B-B) between the first stretcher rod (21) and the second stretcher rod (22) comprises a first elastic outer portion (41) which is adjoined by a middle portion (43) being adjoined by a second elastic outer portion (42).

4. Device according to claim 3, wherein the covering (4) comprises a releasable fastener (44) respectively located between the first elastic outer portion (41) and the middle portion (43) and between the second elastic outer portion (42) and the middle portion (43).

5. Device according to one of the preceding claims, wherein the middle portion (43) comprises a recess (46).

6. Device according to one of the preceding claims, wherein the middle portion (43) comprises at least one rigid element (45).

7. Device according to claim 6, wherein each rigid element (45) is a plastic slat, and wherein two plastic slats are arranged along length (A-A) in an edge region of the middle portion (43).

8. Device according to one of the preceding claims, wherein the at least one spreader rod (3) comprises a tube made of a carbon fiber material.

9. Device according to claim 8, wherein the tube comprises a first tube portion (311) and a second tube portion (312), and wherein the first tube portion (312) includes an inner tube, the width thereof being selected such that the second tube portion (312) can be fitted onto the inner tube to join the first tube portion (311) with the second tube portion (312).

10. Device according to one of the preceding claims, wherein the support frame comprises a first spreader rod (31) and a second spreader rod (32).

## Revendications

1. Dispositif servant à influencer la lumière pendant la prise de photographies avec un cadre de support et un revêtement (4) étendue, dans lequel ledit cadre de support comprend une première tige d'étirage (21), qui est fixée à une première partie d'extrémité du recouvrement (4), et une deuxième tige d'étirage (22), qui est fixée à une deuxième partie d'extrémité du recouvrement (4) qui fait face à la première partie d'extrémité, et dans lequel ledit cadre de support comprend en outre au moins une tige d'écartement (3) avec des moyens de réception (31, 32) côté extrémité comportant chacun des surfaces de réception (322, 321) concaves pour recevoir la surface extérieure d'une tige d'étirage (21, 22) respectivement, et dans lequel ladite au moins une tige d'écartement (3) avec sa longueur est conçue de manière à retenir, dans l'état d'expansion, la première tige d'étirage (21) et la deuxième tige d'étirage (22) contre le recouvrement (4) étiré, **caractérisé en ce que** les surfaces de réception (321, 322) concaves sont semi-circulaires et bombées vers le centre de la tige d'écartement.

2. Dispositif selon la revendication 1, dans lequel le revêtement (4) est conçue élastiquement au moins en parties dans une largeur (B-B) entre la première tige d'étirage (21) et la deuxième tige d'étirage (22), et dans lequel, dans l'état non étiré du revêtement (4), la largeur (B-B) du revêtement (4) est plus courte que la distance entre les surfaces de réception (321, 322) de ladite au moins une tige d'écartement (3).

3. Dispositif selon la revendication 1 ou 2, dans lequel le revêtement (4), dans la largeur (B-B) entre la première tige d'étirage (21) et la deuxième tire d'étirage (22), comprend une première partie extérieure élastique (41), une partie centrale (43) adjacente à celle-ci et une deuxième partie extérieure élastique (42) adjacente à celle-ci.

4. Dispositif selon la revendication 3, dans lequel le revêtement (4) comprend une fixation (44) amovible respectivement entre la première partie extérieure élastique (41) et la partie centrale (43) et entre la deuxième partie extérieure élastique (42) et la partie centrale (43).

5. Dispositif selon l'une des revendications précédentes, dans lequel la partie centrale (43) comporte un évidement (46).

6. Dispositif selon l'une des revendications précédentes, dans lequel la partie centrale (43) comprend au moins un élément rigide (45).

7. Dispositif selon la revendication 6, dans lequel chaque élément rigide (45) est une latte en matière plastique, et dans lequel deux lattes en matière plastique sont disposées sur la longueur (A-A) dans une région de bord de la partie centrale (43).

8. Dispositif selon l'une des revendications précédentes, dans lequel ladite au moins une tige d'écartement (3) comprend un tube en matériau fibre de carbone.

9. Dispositif selon la revendication 8, dans lequel le tube comprend une première partie de tube (311) et une deuxième partie de tube (312), et dans lequel la première partie de tube (312) comprend un tube intérieur, sa largeur étant choisie de telle sorte que la deuxième partie de tube (312) puisse être placée sur le tube intérieur (311) afin de relier la première partie de tube (311) avec la deuxième partie de tube (312).

10. Dispositif selon l'une des revendications précédentes, dans lequel le cadre de support comprend une première tige d'écartement (31) et une deuxième tige d'écartement (32).
